# EUROPEAN PATENT SPECIFICATION

(11) **EP 3 246 866 B1**
(45) Date of publication and mention of the grant of the patent: **18.03.2020**
(21) Application number: 17000854.4
(22) Date of filing: 18.05.2017
(51) Int. Cl.: G06Q 20/20, G06Q 20/36, G06Q 20/32, G06Q 20/38

(54) **SECURE EXCHANGE OF A SENSITIVE DATA OVER A NETWORK BASED ON BARCODES AND TOKENS**
SICHERER AUSTAUSCH EMPFINDLICHER DATEN ÜBER EIN NETZWERK AUF BASIS VON STRICHCODES UND TOKEN
ÉCHANGE SÉCURISÉ DE DONNÉES SENSIBLES SUR UN RÉSEAU BASÉ SUR DES CODES-BARRES ET DES JETONS

(30) Priority: 18.05.2016 FR 1654400; 18.05.2016 US 201615158130
(43) Date of publication of application: 22.11.2017
(73) Proprietor: Amadeus S.A.S., 06410 Biot (FR)
(72) Inventor: Aparicio Ruiz, Pablo, ES-28029 Madrid (ES); Tahon, Mathieu, ES-28027 Madrid (ES); Espejo Malagon, Daniel, ES-28045 Madrid (ES)
(74) Representative: Samson & Partner Patentanwälte mbB

(56) References cited:
- EP-A1- 2 819 080
- WO-A1-2015/054697
- GB-A- 2 478 712
- US-A1- 2013 262 317

## Description

### TECHNICAL FIELD

The invention generally relates to computers and computer software, and in particular to methods, systems, and computer program products for securely exchanging sensitive data over a network.

### BACKGROUND

Because many opportunities exist for sensitive data, such as credit card data, to be compromised during payment, it is mandatory for face-to-face credit card payments to utilize devices that are in compliance with the Payment Card Industry Data Security Standard (PCI-DSS), which helps to alleviate vulnerabilities and protect cardholder data. However, sometimes conforming with PCI-DSS may be extraordinarily difficult and expensive. In one approach for protecting sensitive data, the use of data substitution with a token or alias may be used as a replacement for the actual credit card data. The token may be used in place of an individual's actual credit card during a payment transaction. For example, a user may utilize his or her smartphone or other portable electronic device to pay for a product. Specifically, the user may download an application to a smartphone. The user may then enter information pertaining to a credit card, and sends the information over a network to a group of servers. In response to receiving a user's credit card information, the servers may tokenize the user's credit card information. Those of ordinary skill in the art will readily appreciate that tokens have no meaning by themselves, and therefore may not be used alone. Furthermore, tokenization may be less expensive and more secure than end-to-end encryption.

For example, third party reservation agents (i.e., travel agents) or travelers may utilize computer-based devices in order to create a travel reservation, which presents opportunities for the traveler's credit card data to be compromised during payment. Sometimes a traveler may need to pay for the travel reservation itself or for other related incidentals, such as baggage fees, during transit. That is, the traveler may need to pay for travel related expenses at an airport or another location, such as a train station.

In addition to the above-mentioned challenges to protect cardholder data , it should also be appreciated that travelers may also encounter other issues when attempting to pay for a travel booking at an airport or other similar location. For example, if a traveler wishes to pay for a travel booking using his or her smartphone, this may become problematic if the traveler is visiting a foreign country. This is because many cellular providers may not offer service in another country, or may charge very high rates for data roaming since the traveler is abroad. Thus, there exists a need to accept payments from travelers even if the traveler's smartphone does not have network connectivity. Furthermore, it should also be appreciated that it may be cumbersome and inconvenient for a traveler to remove his wallet from his pocket to retrieve his credit card, especially if the traveler is in a hurry or has many bags to carry in transit. Similarly, it may also be inconvenient for a traveler to search her purse for her pocketbook to retrieve her credit card, especially if her hands are already full with bags that need to be carried in transit.

Thus, improved methods, systems, and computer program products are needed that permit the secure exchange of sensitive data over a network.

GB 2 478 712 A relates to an authorisation system. The authorisation system comprises a transaction processing terminal for processing transactions; and a mobile user device. The user device comprises means for receiving information relating to a particular transaction from the processing terminal, and means for generating a user code to authorise a transaction in dependence upon the received information, wherein the user code is adapted to be received by the processing terminal thereby to enable the processing terminal to process the transaction.

EP 2 819 080 A1 relates to a telecommunication system. The telecommunication system comprises an authorization server for permitting quick authorization by means of a mobile telecommunication device also in an environment where no stable mobile network connection is available. According to said system, the mobile device is configured to automatically request an authorization token from the authorization server well ahead of the actual authorization event. If no mobile network connection is available, the request is automatically and repeatedly resubmitted to the authorization server until the mobile network connection is re-established and the requested authorization code is received. The authorization server is configured to transmit the requested authorization token to the mobile device and to receive the authorization token and information relating to a product or service from a terminal. The authorization server validates the authorization token and authorizes or denies the purchase of the product or service in dependence on a resource account associated with the user of the mobile device. The authorization server transmits the authorization or the denial to the terminal).

### SUMMARY

The invention is defined in the independent claims. The dependent claims define embodiments thereof.

Herein forth, examples of a system for securely exchanging a credit card token between a first computer and an external computer for purchasing a product are disclosed. The first computer includes one or more processors, a memory, and a camera coupled to at least one processor. The first computer scans a first barcode by the camera. The first barcode is published upon a display of the external computer and indicates a plurality of payment parameters for the payment of the product. The first computer decodes the first barcode to extract the payment parameters. The first computer publishes the payment parameters for display to a user. The first computer receives a first input, where the first input indicates a credit card number for purchasing the product, and a credit card token that corresponds to the credit card number is saved in the memory. In response to receiving the first input, the first computer generates a second barcode that contains a first encrypted payload. The first encrypted payload includes the credit card token. The first computer publishes the second barcode for display, where the second barcode is readable by an optical device of the external computer.

In some embodiments, the system further comprises a third computer and a token vault in communication with the external computer. The external computer sends the second barcode to the third computer. In one embodiment, the third computer decodes the second barcode, validates content of the first encrypted payload to obtain the credit card token, and retrieves an original credit card number from the token vault based on the credit card token. In some embodiments, the third computer communicates with a payment network to determine if the original credit card number is valid, and in response to the original credit card number being valid, the payment network authorizes payment for the product and sends an approval to the third computer. In some embodiments, the external computer receives the approval from the third computer for the payment of the product, generates a third barcode that contains a payment receipt for the product, and publishes the third barcode for display. The third barcode is scanned by the camera.

In some embodiments, the plurality of payment parameters include at least one of a monetary amount, a specific type of currency that the monetary amount is based on, a description of the product, and a payment reference identification (ID).

In some embodiments, prior to scanning the first barcode by the camera, the first computer and a third computer are connected to a network, the first computer receives a second input indicating the credit card number, and in response to receiving the second input, the first computer generates a second encrypted payload that contains the credit card number. In some embodiments, the first computer transmits a card provisioning request including the second encrypted payload over the network, the third computer receives the card provisioning request over the network, and in response to receiving the card provisioning request the third computer decrypts the second encrypted payload to obtain the credit card number. In some embodiments, the third computer sends the credit card number to a tokenizer application, and in response to receiving the credit card number, the tokenizer application generates the credit card token. In some embodiments, the credit card token is saved in a token vault and is also transmitted over the network from the third computer back to the first computer, and the first computer stores the credit card token as a hash in the memory. In some embodiments, the processors are part of a portable electronic device.

According to another aspect, a method for securely exchanging a credit card token between a system first computer and an external computer for purchasing a product is disclosed. The method includes scanning a first barcode by a camera of a first computer, where the first barcode is published upon a display of the external computer and the first barcode indicates a plurality of payment parameters of the product. The method further comprises decoding the first barcode, by the first computer, to extract the payment parameters. The method also includes publishing the payment parameters for display to a user by the first computer. The method further includes receiving a first input by the first computer, where the first input indicates a credit card number for purchasing the product, and a credit card token is saved in a memory of the first computer that corresponds to the credit card number. In response to receiving the first input, the method includes generating, by the first computer, a second barcode that contains a first encrypted payload, where the first encrypted payload includes the credit card token. Finally, the method includes publishing the second barcode for display by the first computer, where the second barcode is readable by an optical device of the external computer.

In some embodiments, the external computer sends the second barcode over a network to a third computer. The third computer decodes the second barcode, validates content of the first encrypted payload to obtain the credit card token, and retrieves an original credit card number from a token vault based on the credit card token. In some embodiments, the third computer sends a communication to a payment network. In response to receiving the communication, the payment network determines if the original credit card number is valid. In response to the original credit card number being valid, the payment network authorizes payment for the product by the payment network and sends an approval to the third computer. In some embodiments, the third computer receives the approval from for the payment for the product, sends the approval over the network to the external computer, generates a third barcode that contains a payment receipt for the product, and publishes the third barcode for display by the external computer, wherein the third barcode is scanned by the camera of the first computer.

In some embodiments, prior to scanning the first barcode by the first computer, the first computer and the third computer are connected to a network. The first computer receives a second input indicating the credit card number and generates, in response to receiving the second input, a second encrypted payload that contains the credit card number. The first computer transmits a card provisioning request including the second encrypted payload over the network. The third computer receives the card provisioning request over the network, and in response to receiving the card provisioning request, decrypts the second encrypted payload to obtain the credit card number. The third computer sends the credit card number to a tokenizer application of the third computer and, in response to receiving the credit card number, generates the credit card token by the tokenizer application. In some embodiments, the third computer saves the credit card token in a token vault and transmits the credit card token over the network. The first computer receives the credit card token by the system over the network and stores the credit card token as a hash in the memory of the system. In some embodiments, the first computer is a portable electronic device.

According to still another aspect, a computer program product for securely exchanging a credit card token with an external computer for purchasing a product is provided. The computer program product comprises a non-transitory computer-readable storage medium and program code stored on the non-transitory computer-readable storage medium that, when executed by one or more processors, causes the one or more processors to scan a first barcode by a camera, where the first barcode is published upon a display of the external computer and the first barcode indicates a plurality of payment parameters of the product. The processors are further caused to decode the first barcode to extract the payment parameters. The processors are further caused to publish the payment parameters for display to a user. The processors are further caused to receive a first input, where the first input indicates a credit card number for purchasing the product, and a credit card token that corresponds to the credit card number is saved in the memory. In response to receiving the first input, the processors are further caused to generate a second barcode that contains a first encrypted payload, where the first encrypted payload includes the credit card token. The processors are further caused to publish the second barcode for display. The second barcode is readable by an optical device of the external computer.

The above summary presents a simplified summary in order to provide a basic understanding of some aspects of the systems and/or methods discussed herein. This summary is not an extensive overview of the systems and/or methods discussed herein. It is not intended to identify key/critical elements or to delineate the scope of such systems and/or methods. Its sole purpose is to present some concepts in a simplified form as a prelude to the more detailed description that is presented later.

### BRIEF DESCRIPTION OF THE DRAWINGS

The accompanying drawings, which are incorporated in and constitute a part of this specification, illustrate various embodiments of the invention and, together with the general description of the invention given above, and the detailed description of the embodiments given below, serve to explain the embodiments of the invention.
FIG. 1 is a diagrammatic view of an exemplary operating environment for exchanging a credit card token in order to purchase a product, where the operating environment includes a client device, a merchant system, and a server.
FIG. 2 is a diagrammatic view of an exemplary computer system of FIG. 1.
FIG. 3 is a diagrammatic view of the client device shown in FIG. 1 downloading an application.
FIG. 4 is a diagrammatic view of the client device and the merchant system shown in FIG. 1, where both the client device and the merchant system may display unique barcodes.

### DETAILED DESCRIPTION

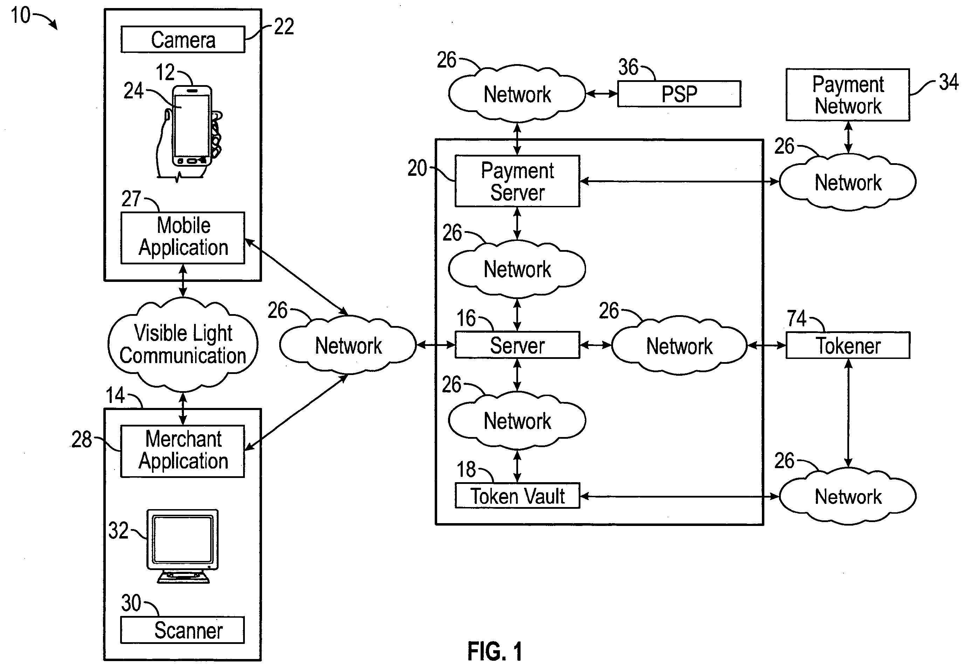

Referring now to FIG. 1, an operating environment 10 in accordance with an embodiment of the invention may include a client device 12, a merchant system 14, and one or more servers 16. As explained in greater detail below, the server 16 may be in communication with a token vault 18 as well as a payment server 20. Those of ordinary skill in the art will readily appreciate that the token vault 18 is a secure server where tokens and a corresponding primary account number (PAN) are stored securely. The PAN, which is typically between fourteen to sixteen numbers in length, is a credit card number associated with an account holder's credit card. The token vault 18 is the only location within the operating environment 10 in which the token may be mapped back to the PAN. Moreover, it should also be appreciated that the token vault 18 complies with the Payment Card Industry Data Security Standard (PCI-DSS) specifications. Each of the client device 12, the merchant system 14, and the server 16 may communicate through a network 26. The network 26 may include one or more private or public networks (e.g., the Internet) that enable the exchange of data.

The client device 12 may be, for example, a tablet computer, smartphone, or any other suitable computing device. It is to be appreciated that since an end user may eventually utilize the client device 12 during transit while traveling, client device 12 may be a portable electronic device. That is, the client device 12 may be sized such that the client device 12 may be carried in a traveler's purse, carry-on baggage, wallet, or even in a traveler's pocket. As explained in greater detail below, an end user may use the client device 12 to book and pay for a travel reservation by accessing the merchant system 14. For example, the traveler may launch a browser application, and use the browser application to pay for a travel reservations. It is to be appreciated that the traveler may first download an application 27 to the memory of the client device 12 first before the client device 12 may be used to book and pay for a travel reservation.

The client device 12 may include a camera 22 as well as a screen 24. The camera 22 is able to capture images. Furthermore, it should also be appreciated that the client device 12 is able to recognize and decode barcodes that are captured by the camera 22. Some examples of barcodes that may be captured by the camera 22 and decoded by the client device 12 include, but are not limited to, quick response codes (QR codes). The screen 24 of the client device 12 may be, for example, a liquid crystal display (LCD) that electronically displays graphics like text, images, and moving pictures.

The merchant system 14 may be associated with a specific travel provider or providers. In one embodiment, the merchant system 14 may include a merchant application 28, an optical device 30, and a screen 32. As explained in greater detail below, the merchant application 28 may be used in conjunction with the client device 12 in order to securely exchange a credit card token for the purchase of a product. It is to be appreciated that the merchant system 14 may be mobile as well. In one non-limiting embodiment, the product may be a travel product such as, for example, airline travel, train travel, ferry travel, hotel rooms, car rentals, sightseeing, and other travel-related activities. The product may also encompass not only travel products, but also other travel-related expenses such as, for example, baggage fees that may be incurred during transit, or upgrading an existing travel reservation. The optical device 30 may be any type of device for capturing images such as, for example, a scanner or a webcam. Specifically, the merchant system 14 may recognize and decode barcodes that are published upon the screen 24 of the client device 12. The screen 32 of the merchant system 14 may be, for example, a LCD that electronically displays graphics like text, images, and moving pictures.

The server 16 may be in communication with the token vault 18 as well as the payment server 20 through the network 26. The payment server 20 may be in communication with a payment network 34 and a payment service provider (PSP) 36 via the payment server 20. As explained in greater detail below, the server 16 may retrieve an original credit card number from the token vault 18 based on the credit card token. The server 16 may receive authorization from the payment network 34 that the original credit card number is valid, and confirms with the PSP 36 that the merchant system 14 is in fact authorized to perform a payment to purchase a particular product.

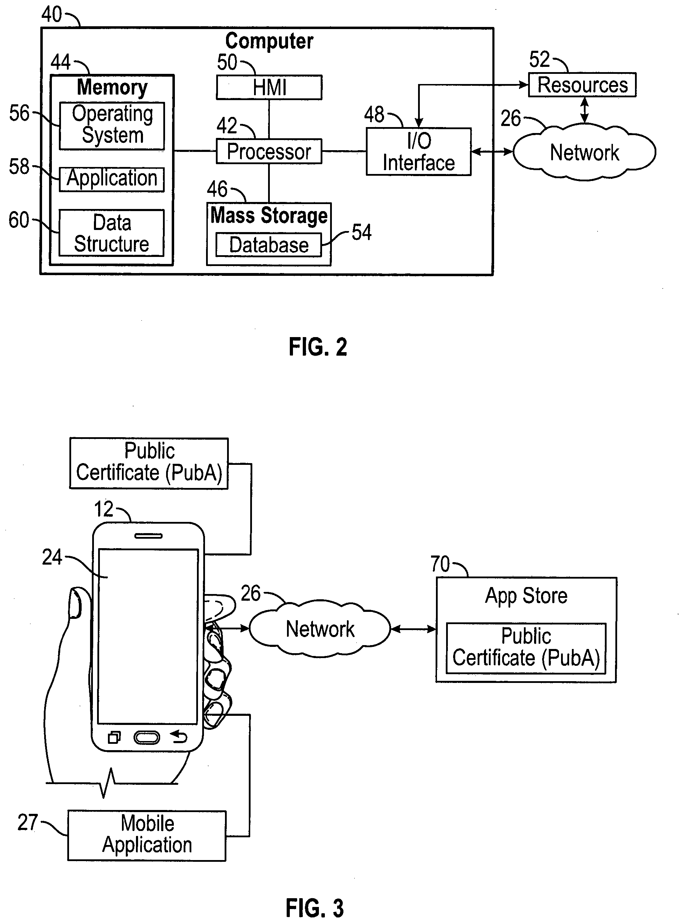

Referring now to FIG. 2, the client device 12, the merchant system 14, and the server 16 of operating environment 10 may be implemented on one or more computer devices or systems, such as exemplary computer system 40. The computer system 40 may include a processor 42, a memory 44, a mass storage memory device 46, an input/output (I/O) interface 48, and a Human Machine Interface (HMI) 50. The computer system 40 may also be operatively coupled to one or more external resources 52 via the network 26 or I/O interface 48. External resources may include, but are not limited to, servers, databases, mass storage devices, peripheral devices, cloud-based network services, or any other suitable computer resource that may be used by the computer system 40.

The processor 42 may include one or more devices selected from microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on operational instructions that are stored in the memory 44. Memory 44 may include a single memory device or a plurality of memory devices including, but not limited to, read-only memory (ROM), random access memory (RAM), volatile memory, non-volatile memory, static random access memory (SRAM), dynamic random access memory (DRAM), flash memory, cache memory, or any other device capable of storing information. The mass storage memory device 46 may include data storage devices such as a hard drive, optical drive, tape drive, volatile or non-volatile solid state device, or any other device capable of storing information.

The processor 42 may operate under the control of an operating system 56 that resides in memory 44. The operating system 56 may manage computer resources so that computer program code embodied as one or more computer software applications, such as an application 58 residing in memory 44, may have instructions executed by the processor 42. In an alternative embodiment, the processor 42 may execute the application 58 directly, in which case the operating system 56 may be omitted. One or more data structures 60 may also reside in memory 44, and may be used by the processor 42, operating system 56, or application 58 to store or manipulate data.

The I/O interface 48 may provide a machine interface that operatively couples the processor 42 to other devices and systems, such as the network 26 or external resource 52. The application 58 may thereby work cooperatively with the network 26 or external resource 52 by communicating via the I/O interface 48 to provide the various features, functions, applications, processes, or modules comprising embodiments of the invention. The application 58 may also have program code that is executed by one or more external resources 52, or otherwise rely on functions or signals provided by other system or network components external to the computer system 40. Indeed, given the nearly endless hardware and software configurations possible, persons having ordinary skill in the art will understand that embodiments of the invention may include applications that are located externally to the computer system 40, distributed among multiple computers or other external resources 52, or provided by computing resources (hardware and software) that are provided as a service over the network 26, such as a cloud computing service.

The HMI 50 may be operatively coupled to the processor 42 of computer system 40 in a known manner to allow a user to interact directly with the computer system 40. The HMI 50 may include video or alphanumeric displays, a touch screen, a speaker, and any other suitable audio and visual indicators capable of providing data to the user. The HMI 50 may also include input devices and controls such as an alphanumeric keyboard, a pointing device, keypads, pushbuttons, control knobs, microphones, etc., capable of accepting commands or input from the user and transmitting the entered input to the processor 42.

A database 54 may reside on the mass storage memory device 46, and may be used to collect and organize data used by the various systems and modules described herein. The database 54 may include data and supporting data structures that store and organize the data. In particular, the database 54 may be arranged with any database organization or structure including, but not limited to, a relational database, a hierarchical database, a network database, or combinations thereof. A database management system in the form of a computer software application executing as instructions on the processor 42 may be used to access the information or data stored in records of the database 54 in response to a query, where a query may be dynamically determined and executed by the operating system 56, other applications 58, or one or more modules.

Turning referring now to FIG. 3, the client device 12 may download the application 27 to its memory. Specifically, the client device 12 may connect to an application server 70 over the network 26, and download the application 27 to the memory of the client device 12. As seen in FIG. 3 a public certificate (PubA certificate) may be associated with the application 27. Once the application 27 has been successfully downloaded, an end user, such as a traveler, may create a passcode. The passcode may be required to gain access to the application 27. In one embodiment, the passcode may be entered manually into the client device 12 using a keyboard (not illustrated). However, those of ordinary skill in the art will appreciate that other approaches may also be used to enter the passcode as well. In one embodiment, the passcode may need to be entered twice in order to prevent accidental mistyping. Once the passcode is created, the passcode may be hashed and stored in the memory of the client device 12 for future use. Those of ordinary skill in the art will appreciate that hashing passwords take a variable-length password and create a cryptic, fixed-length password based on the original, variable-length password.

The client device 12 may also generate a pair of asymmetric keys, (PubP, PrivP). PubP represents the public key, and PrivP represents a private key. Asymmetric cryptography, which is also referred to as public-key cryptography, is a cryptographic system that uses a pair of keys. Namely, the public key PubP may be disseminated widely, and the private key (PrivP), may be access-controlled using the passcode. The asymmetric keys are stored to the memory of the client device 12.

Once the application 27 and the asymmetric keys are stored to the memory of the client device 12, the end user may log into the application 27. Specifically, the end user may log into the application 27 and enter the passcode. If the hashed passcode entered by the user matches the previously stored hash saved in the memory of the client device 12, then access to the private key PrivP is granted, and access to further operations is granted. Specifically, the end user may now register one or more credit cards that may be used to purchase a product such as, for example, airline ticket using the application 27. The credit cards are each associated with a unique credit card number.

Referring back to FIG. 1, it is to be appreciated that the client device 12 should have connectively to the network 26 before the credit card may be registered. Registration of a unique credit card using the application 27 of the client device 12 shall now be explained. First, the end user may select an option for registering a new credit card number using the client device 12. For example, the end user may select an option such as, for example, "Register Card" on a menu that is displayed upon the screen 24 of the client device 12. The end user may then input the credit card number and other credit card details using a keyboard or other user interface of the client device 12. However, it is to be appreciated that other approaches may be used as well to input credit card information such as, for example, taking a photo of the actual credit card and then analyzing the photo through Optical Character Recognition (OCR) technology. Some examples of other credit card details include, but are not limited to, an expiration date associated with the card, the primary cardholder's name, the primary cardholder's address, and the card verification value (CVV) associated with the credit card. Once the end user has entered the credit card number and the associated credit card details, a credit card check may be executed by the application 27 to confirm the expiration date. The application 27 may also execute a Luhn algorithm, which is a checksum formula used to validate the credit card number for mistyped credit card numbers.

Once the credit card number and the associated credit card details are verified, the application 27 of the client device 12 may build an encrypted payload, which is referred to as the card provisioning payload. Specifically, the application 27 of the client device 12 may obtain the public certificate PubA. The application 27 may then generate a symmetric key S1 and its associated initial vector I1. The symmetric key S1 and the initial vector I1 may be concatenated, and then signed by the private key (PrivP) in order to obtain (S1, I1)*_{P}, where the "*" denotes that the value is signed. The application 27 may then concatenate the symmetric key S1, the initial vector I1, and (S1, I1)*_{P}, and then encrypt these values using the public certificate PubA based on the Optical Asymmetric Encryption Padding (OAEP) padding scheme to obtain (S1, I1, (S1, I1)*_{P})'_{A}, where the ""' denotes that the value is encrypted.

The application 27 of the client device 12 may then sign the credit card number, which is herein denoted as N, with the private key PrivP to obtain the signature N*_{P}. The credit card number N may then be concatenated with the signature N*_{P} and encrypted with the symmetric key S1 to obtain (N, N*_{P})'_{S1}. Finally, the application 27 of the client device 12 may concatenate the certificate of the public key PubP, the result of which is called certP, along with (S1, I1, (S1, I1)*_{P})'_{A} and (N, N*_{P})'_{S1}. The result is the card provisioning payload. The client device 12 may send the card provisioning payload to the server 16 over the network 26 as part of a card provisioning request.

In response to receiving the card provisioning request, the server 16 may extract the card provisioning payload and then decrypt the card provisioning payload in order to obtain the credit card number N. Specifically, the server 16 may then obtain the symmetric key S1, the initial vector I1, and (S1, I1)*_{P} and decrypt each of these values with a private certificate PrivA. The private certificate PrivA is the private key associated with the public certificate PubA, and the public certificate PubA and the private certificate PrivA are generated before the application 27 is saved on the application server 70. The server 16 may then verify the signature of (S1, I1)*_{P} of the symmetric key S1 and the initial vector I1 using the concatenated certificate of the public key certP. The server 16 may then obtain the credit card number N and N*_{P} and decrypt both these values using the symmetric key S1. The signature N*_{P} of the credit card number N may then be verified using the concatenated certificate of the public key certP.

The server 16 may then send the credit card number N to a tokenizer application 74. The tokenizer application 74 may then generate the credit card token T based on the unique credit card number N. Those of ordinary skill in the art will readily appreciate that tokens may not be used outside the context of a specific unique transaction with a particular merchant. The token application 74 may then send the credit card token T back to the server 16. The token application 74 may also send the token T as well as the unique credit card number N to the token vault 18. The token vault 18 is the only location within the operating environment 10 in which the credit card token T is mapped back to the unique credit card number N.

In response to receiving the credit card token T from the tokenizer application 74, the server 16 may then generate a symmetric key S2 and its initial vector I2. In one embodiment, the symmetric key S2 is based on the 128-bit advanced encryption standard using the cipher block chaining mode of encryption (AES 128 CBC). The server 16 may then concatenate the symmetric key S2 and the initial vector I2, and then sign the value with the private certificate PrivA to obtain (S2, I2)*_{A}. The server 16 may then concatenate the symmetric key S2, the initial vector I2, and (S2, I2)*_{A} encrypt them with the public key PubP based on the OAEP padding scheme to obtain (S2, I2, (S2, I2)*_{A})'_{P}. The server 16 may then sign the credit card token T with the private certificate PrivA to obtain a signed token T*_{A}. The server 16 may then concatenate the token T with the signed token T*_{A}, and encrypts both the values with the symmetric key S2 to obtain (T, T*_{A})'_{S2}. Finally, the server 16 may then concatenate (S2, I2, (S2, I2)*_{A})'_{P} and (T, T*_{A})'_{S2}. The resulting payload is sent in a card provisioning reply 76 back over the network 26 to the client device 12.

In response to receiving the card provisioning reply 76, the application 27 of the client device 12 may verify a concatenated certificate of the private certificate PrivA, which is referred to as certA, with pinned keys. Those of ordinary skill in the art will readily appreciate that the pinned keys are a security mechanism for resisting impersonation by attackers using fraudulent certificates. The application 27 of the client device 12 may then obtain the symmetric key S2, the initial vector I2, and the signature (S2, I2)*_{A}, and decrypts these values with the private key PrivP. The application of the client device 12 may then verify the signature (S2, I2)*_{A} of the symmetric key S2 and the initial vector I2 with the concatenated certificate of the private certificate certA. The application 27 of the client device 12 may then obtain the credit card token T as well as the signed token T*_{A}, and decrypts these values using the symmetric key S2. The application 27 of the client device 12 may then verify the signed token T*_{A} of the credit card token T with the concatenated certificate of the private certificate certA. Finally, after then signed token T*_{A} is verified, the credit card token T may be stored in the memory of the client device 12.

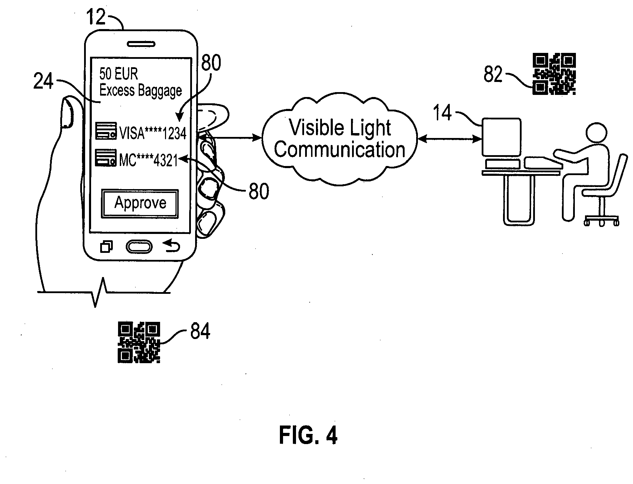

It is to be appreciated that the client device 12 stores the credit card token T in its respective memory, and that the credit card token may be used at a later time during a payment transaction. If the end user is traveling and is situated in a foreign country or other location where cellular service is unavailable or is costly due to roaming charges, the end user does not need network connectively in order to pay for a specific travel reservation, since the end user's credit card token T has already been stored in memory. Furthermore, it should also be appreciated that more than one credit card token may be saved in memory of the client device 12, where each credit card token corresponds to a unique credit card. For example, turning now to FIG. 4, the client device 12 has two credit card numbers 80 displayed upon the screen 24. It is to be appreciated that only the last four digits of the credit card numbers 80 are visible to the end user, and the full credit card number is not stored in memory of the client device 12.

During travel, the end user may need to pay for a travel reservation and/or or other related incidentals such as, for example, excess baggage fees. In the exemplary embodiment as shown in FIG. 4, the end user may need to pay excess baggage fees, which costs fifty euros. However, it is to be appreciated that the embodiment as shown in FIG. 4 is merely exemplary in nature and that various other products and fees may be purchased as well. Referring now to both FIGS. 1 and 4, an agent may then verify that the end user wishes to pay for the product (e.g., the fifty euros for the excess baggage fees) using one of the credit cards that have their corresponding credit card token T saved in memory of the client device 12. Once this is confirmed, the agent may then use a keyboard or other input device of the merchant system 14 (not illustrated) to indicate that the end user wishes to pay for the product using his or her client device 12.

In response to receiving the indication from the agent, the merchant application 28 of the merchant system 14 may send a request to the server 16 over the network 26. The request sent to the server 16 is for a barcode 82, or a barcode payload, which indicates a plurality of payment parameters regarding the product. In the exemplary embodiment as shown in FIG. 4 the barcode 82 is a QR code; however, it is to be appreciated that other types of barcodes may be generated as well. In one embodiment, the payment parameters may include, but are not limited to, a monetary amount owed (e.g., fifty euros), a specific type of currency that the monetary amount is based upon (e.g., euros), a description of the product (e.g., excess baggage fees), and a payment reference identification (ID).

In response to receiving the request from the merchant system 14, the server 16 may then confirm with the PSP 36 that the merchant system 14 is in fact authorized to perform a payment using the barcode 82. If the merchant system 14 is authorized to perform a payment using the barcode 82, then the PSP 36 may generate the barcode 82. The barcode 82 may be encoded with a pair of temporary pair of asymmetric keys. The PSP 36 may then send an authorization to the server 16. The authorization include the barcode 82. In response to receiving the authorization from the PSP 36, the server 16 may then send the barcode 82 over the network 26 to the merchant system 14. In response to receiving the barcode 82, the application 28 of the merchant system 14 may publish the barcode 82 upon its corresponding screen 24.

Once the barcode 82 is published on the screen 24 of the merchant system 14, the end user may then position the client device 12 such that the camera 22 may scan the barcode 82. It is to be appreciated that the end user has already logged into the application 27 of the client device 12, and has successfully entered the passcode. The client device 12 may then decode the barcode 82 in order to extract the payment parameters. The client device 12 may then publish the payment parameters upon its screen 24. For example, as seen in FIG. 4, the payment parameters indicate that fifty euros are required for payment of excess baggage fees. The client device 12 may also publish the two credit card numbers 80 that have their corresponding credit card tokens T saved in memory of the client device 12.

The end user may then select or input which credit card number 80 should be used to purchase the product using the client device 12. In one embodiment, the end user may also use a default credit card number 80 that is preselected at payment time, or more complex rules may be utilized for automatic selection of a particular credit card number. In the event only a single credit card number 80 has a corresponding credit card token T saved in memory, then the end user may simply need to confirm that the single credit card number 80 should be used. In response to receiving a confirmation from the end user, the application 17 of the client device 12 may then generate another barcode 84. In the exemplary embodiment as shown in FIG. 4, the barcode 84 is also a QR code; however it is to be understood that other types of barcodes may be used as well. The barcode 84 includes an encrypted payload. Generation of the encrypted payload is described below.

The application 27 of the client device 12 may first generate a symmetric key S3 and its initial vector 13. The application 27 of the client device 12 may then concatenate both the symmetric key S3 and the initial vector I3 and sign the result with the private key PrivP to obtain (S3, I3)*_{P}. The symmetric key S3, the initial vector 13, and (S3, I3)*ₚ may then be encrypted with the public certificate PubA based on the OAEP padding scheme to obtain (S3, I3, (S3, I3)*_{P})'_{A}. The application 27 of the client device 12 may then build a payload L. Specifically, the payload L may include (S3, I3, (S3, I3)*_{P})'_{A} and the credit card token T. The payload L is then signed with the private key PrivP to obtain L*_{P}. The payload L and the signed payload L*_{P} are then signed with the symmetric key S3 to obtain (L, L*_{P})'_{S3}. Finally, the concatenated certificate of the public key certP, (S3, I3, (S3, I3)*_{P})'_{A} and (L, L*_{P})'_{S3} are concatenated to create the encrypted payload.

The application 27 of the client device 12 may then publish the QR code 84 upon its screen 24. Once the end user sees that the QR code 84 has published upon the screen 24 of the client device 12, the end user may then position the client device 12 such that the QR code 84 may be read by the optical device 30 of the merchant system 14 using visible light communication. The merchant system 14 may then send the QR code 84, or the QR code payload, over the network 26 to the server 16. The server 16 may then decode and validate the encrypted payload contained by the QR code 84. Specifically, the server 16 may validate the encrypted payload in order to obtain the credit card token T. It is to be appreciated that prior to validation, the transaction may be canceled. Thus, no payment may be made using the end user's credit card.

The server 16 may validate the encrypted payload by obtaining the symmetric key S3, the initial vector I3, and (S3, I3)*_{P}, and decrypts these values using the private certificate PrivA. The server 16 may then verify the signature (S3, I3)*_{P} of the symmetric key S3 and the initial vector I3 using the concatenated certificate of the public key certP to obtain the payload L and the signed payload L*_{P}. The signed payload L*_{P} is then verified by the concatenated certificate of the public key certP. Validating the encrypted payload allows for the server 16 to retrieve the original credit card number N from the token vault 18.

Once the original credit card number N has been retrieved, the server 16 may then perform a payment authorization to get approval from the credit card issuer. Specifically, the server 16 may send a query over the network 26 to the payment network 34 to determine if the credit card number N is valid and approval is granted from the credit card issuer to make a payment. The payment network 34 may send an authorization over the network 26 and back to the server 16. In response to receiving the payment authorization from the payment network, the server 16 may then send a reply over the network 26 to the merchant system 14. The reply indicates that the credit card number N is valid and that payment has been confirmed by the credit card issuer.

In response to receiving the reply from the server 16, the merchant system 14 may then generate a payment receipt. In particular, the merchant application 28 of the merchant system 14 may then generate a payment receipt that is contained within a barcode (not illustrated). The barcode may be published upon the screen 32 of the merchant system 14. The end user may then position the client device 12 such that the camera 22 may scan the barcode published upon the screen 32 of the merchant system 14.

Referring generally to the figures, the disclosed system provides an user-friendly, convenient approach for the client device to communicate with the merchant system, even when the client device has limited or no network connectivity. It is to be appreciated that a traveler may not be able to connect to the Internet during transit, especially when he or she may be visiting foreign countries or areas of the world where network connectivity is limited or non-existent. Indeed, the disclosed system utilizes the existing hardware on a client device (e.g., the camera) to scan and decode a barcode that is published upon the screen of the merchant system. The disclosed system provides an more efficient approach for a traveler to pay for a travel reservation without the need for his or her physical credit card. In other words, travelers may no longer need to locate their physical credit card, which may be difficult to locate especially if a traveler is carrying numerous bags in transit. Finally, corporate cards, shared cards, frequent flier miles, or even virtual credit cards may be used as well.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer-readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer-readable program instructions for carrying out operations of the embodiments of the invention may be, for example, assembly language or either source code or object code written in any combination of one or more programming languages.

Various program code described herein may be identified based upon the application within that it is implemented in specific embodiments of the invention. However, it should be appreciated that any particular program nomenclature that follows is used merely for convenience, and thus the invention should not be limited to use solely in any specific application identified and/or implied by such nomenclature. Furthermore, given the generally endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the embodiments of the invention are not limited to the specific organization and allocation of program functionality described herein.

The program code embodied in any of the applications/modules described herein is capable of being individually or collectively distributed as a program product in a variety of different forms. In particular, the program code may be distributed using a computer-readable storage medium having computer-readable program instructions thereon for causing a processor to carry out aspects of the embodiments of the invention.

Computer-readable storage media, which is inherently non-transitory, may include volatile and non-volatile, and removable and non-removable tangible media implemented in any method or technology for storage of information, such as computer-readable instructions, data structures, program modules, or other data. Computer-readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer-readable storage medium should not be construed as transitory signals per se (e.g., radio waves or other propagating electromagnetic waves, electromagnetic waves propagating through a transmission media such as a waveguide, or electrical signals transmitted through a wire). Computer-readable program instructions may be downloaded to a computer, another type of programmable data processing apparatus, or another device from a computer-readable storage medium or to an external computer or external storage device via a network.

Computer-readable program instructions stored in a computer-readable medium may be used to direct a computer, other types of programmable data processing apparatus, or other devices to function in a particular manner, such that the instructions stored in the computer-readable medium produce an article of manufacture including instructions that implement the functions, acts, and/or operations specified in the flow charts, sequence diagrams, and/or block diagrams. The computer program instructions may be provided to one or more processors of a general purpose computer, a special purpose computer, or other programmable data processing apparatus to produce a machine, such that the instructions, which execute via the one or more processors, cause a series of computations to be performed to implement the functions, acts, and/or operations specified in the flow charts, sequence diagrams, and/or block diagrams.

In certain alternative embodiments, the functions, acts, and/or operations specified in the flow charts, sequence diagrams, and/or block diagrams may be re-ordered, processed serially, and/or processed concurrently consistent with embodiments of the invention. Moreover, any of the flow charts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While all of the invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

## Claims

1. A system (10) for securely exchanging a credit card token (T) between a first computer (12) and an external computer (14) for purchasing a product, the system (10) comprising:
the external computer (14);
the first computer (12) with one or more processors, a camera (22) coupled to the one or more processors, and a memory coupled to the one or more processors, the memory storing data comprising a database and program code that, when executed by the one or more processors, causes the system (10) to:
scan a first barcode (82) by the camera (22), wherein the first barcode (82) is published upon a display (24) of the external computer (14) and the first barcode (82) indicates a plurality of payment parameters of the product;
decode the first barcode (82) to extract the payment parameters;
publish the payment parameters for display to a user;
receive a first input, wherein the first input indicates a credit card number (80) for purchasing the product;
in response to receiving the first input, generate a second barcode (84) that contains a first encrypted payload, wherein the first encrypted payload includes a credit card token (T) that corresponds to the credit card number (80), wherein the credit card token (T) is stored in the memory; and
publish the second barcode (84) for display, wherein the second barcode (84) is readable by an optical device (30) of the external computer (14),
wherein prior to scanning the first barcode (82) by the camera (22), the first computer (12) and a third computer (16) are connected to a network (26), wherein the first computer (12) is arranged to:
receive a second input indicating the credit card number (80);
generate a second encrypted payload that contains the credit card number (80) in response to receiving the second input;
transmit a card provisioning request including the second encrypted payload over the network (26),
wherein the third computer (16) is arranged to:
receive the card provisioning request over the network (26);
decrypt, in response to receiving the card provisioning request, the second encrypted payload to obtain the credit card number (80), send the credit card number (80) to a tokenizer application (74),
wherein, in response to receiving the credit card number (80), the tokenizer application (74) generates the credit card token (T),
wherein the credit card token (T) is saved in a token vault (18) and is also transmitted over the network (26) from the third computer (16) back to the first computer (12), and
wherein the first computer (12) is arranged to store the credit card token (T) in the memory.

2. The system (10) of claim 1 further comprising:
the third computer (16) in communication with the external computer (14), wherein the external computer (14) is arranged to send the second barcode (82) to the third computer (16); and
the token vault (18) in communication with the third computer (16);
wherein the third computer (16) is arranged to decode the second barcode (82), to validate content of the first encrypted payload to obtain the credit card token (T), and to retrieve an original credit card number (N) from the token vault (18) based on the credit card token (T).

3. The system (10) of claim 2 wherein the third computer (16) is arranged to communicate with a payment network (34) to determine if the original credit card number (N) is valid, and in response to the original credit card number (N) being valid, the payment network (34) authorizes payment for the product and sends an approval to the third computer (16).

4. The system (10) of claim 3 wherein the external computer (14) is arranged to receive the approval from the third computer (16) for the payment for the product, to generate a third barcode that contains a payment receipt for the product, and to publish the third barcode for display, wherein the third barcode is scanned by the camera (22).

5. The system (10) of any of claims 1 to 4 wherein the one or more processors are part of a portable electronic device.

6. A method for securely exchanging a credit card token (T) between a first computer (12) and an external computer (14) for purchasing a product, the method comprising:
scanning a first barcode (82) by a camera (22) of a first computer (12), wherein the first barcode (82) is published upon a display (24) of the external computer (14) and the first barcode (82) indicates a plurality of payment parameters of the product;
decoding the first barcode (82), by the first computer (12), to extract the payment parameters;
publishing the payment parameters for display to a user by the first computer (12);
receiving a first input by the first computer (12), wherein the first input indicates a credit card number (80) for purchasing the product;
in response to receiving the first input, generating, by the first computer (12), a second barcode (84) that contains a first encrypted payload, wherein the first encrypted payload includes a credit card token (T) that corresponds to the credit card number (80), wherein the credit card token (T) is stored in a memory of the first computer (12); and
publishing the second barcode (84) for display by the first computer (12), wherein the second barcode (84) is readable by an optical device (30) of the external computer (14),
wherein the method further comprises:
prior to scanning the first barcode (82) by the first computer (12), connecting the first computer (12) and a third computer (16) to a network (26);
receiving, by the first computer (12), a second input indicating the credit card number (80);
in response to receiving the second input, generating, by the first computer (12), a second encrypted payload that contains the credit card number (80);
transmitting, by the first computer (12), a card provisioning request including the second encrypted payload over the network (26);
receiving the card provisioning request, by the third computer (16), over the network (26);
in response to receiving the card provisioning request, decrypting the second encrypted payload to obtain the credit card number (80) by the third computer (16);
sending the credit card number (16) to a tokenizer application (74) by the third computer (16); and
in response to receiving the credit card number (80), generating the credit card token (T) by the tokenizer application (74),
wherein the method further comprises:
saving the credit card token (T) in a token vault (18) by the third computer (16);
transmitting, by the third computer (16), the credit card token (T) over the network (26);
receiving the credit card token (T) by the first computer (12) over the network (26); and
storing the credit card token (T) in the memory of the first computer (12).

7. The method of claim 6 further comprising:
sending, by the external computer (14), the second barcode (84)over the network (26) to the third computer (16);
decoding, by the third computer (16), the second barcode (84);
validating content of the first encrypted payload, by the third computer (16), to obtain the credit card token (T); and
retrieving, by the third computer (16), an original credit card number (N) from the token vault (18) based on the credit card token (T).

8. The method of claim 7 further comprising:
sending a communication to a payment network (34) by the third computer (16);
in response to receiving the communication, determining if the original credit card number (N) is valid by the payment network (34);
in response to the original credit card number (N) being valid, authorizing payment for the product by the payment network (34); and
sending an approval to the third computer (16) by the payment network (34).

9. The method of claim 8 further comprising:
receiving, by the third computer (16), the approval from for the payment for the product;
sending the approval over the network (26) to the external computer (14);
generating, by the external computer (14), a third barcode that contains a payment receipt for the product; and
publishing the third barcode for display by the external computer (14), wherein the third barcode is scanned by the camera (22) of the first computer (12).

10. The method of any of claims 6 to 9 wherein the first computer (12) is a portable electronic device.

11. A computer program product for securely exchanging a credit card token (T) with an external computer (14) for purchasing a product, the computer program product comprising:
program code instructions stored on a computer-readable medium to execute the process steps according to claims 6 to 10 when said program is run on a computer.

## Patentansprüche

1. System (10) zum sicheren Austauschen eines Kreditkarten-Tokens (T) zwischen einem ersten Computer (12) und einem externen Computer (14) zum Kaufen eines Produktes, wobei das System (10) umfasst:
den externen Computer (14);
den ersten Computer (12) mit einem oder mehreren Prozessoren, einer mit dem einen oder den mehreren Prozessoren gekoppelten Kamera (22) und einem mit dem einen oder den mehreren Prozessoren gekoppelten Speicher, wobei der Speicher Daten speichert, die eine Datenbank und Programmcode umfassen, der, wenn er durch den einen oder die mehreren Prozessoren ausgeführt wird, das System (10) dazu veranlasst:
einen ersten Barcode (82) durch die Kamera (22) abzutasten, wobei der erste Barcode (82) auf einer Anzeige (24) des externen Rechners (14) bekannt gegeben ist und der erste Barcode (82) eine Vielzahl von Bezahlparametern des Produktes angibt;
den ersten Barcode (82) zu dekodieren, um die Bezahlparameter zu extrahieren;
die Bezahlparameter zur Anzeige für einen Benutzer bekannt zu geben;
eine erste Eingabe zu empfangen, wobei die erste Eingabe eine Kreditkartennummer (80) zum Kaufen des Produktes angibt;
als Reaktion auf Empfangen der ersten Eingabe einen zweiten Barcode (84) zu erzeugen, der eine erste verschlüsselte Nutzlast enthält, wobei die erste verschlüsselte Nutzlast ein Kreditkarten-Token (T) beinhaltet, das der Kreditkartennummer (80) entspricht, wobei das Kreditkarten-Token (T) im Speicher gespeichert ist; und
den zweiten Barcode (84) zur Anzeige bekannt zu geben, wobei der zweite Barcode (84) durch eine optische Vorrichtung (30) des externen Computers (14) lesbar ist,
wobei vor dem Abtasten des ersten Barcodes (82) durch die Kamera (22) der erste Computer (12) und ein dritter Computer (16) mit einem Netzwerk (26) verbunden sind, wobei der erste Computer (12) dazu ausgelegt ist:
eine zweite Eingabe zu empfangen, die die Kreditkartennummer (80) angibt;
als Reaktion auf Empfangen der zweiten Eingabe eine zweite verschlüsselte Nutzlast zu erzeugen, die die Kreditkartennummer (80) enthält;
eine Kartenbereitstellungsanforderung über das Netzwerk (26) zu übertragen, die die zweite verschlüsselte Nutzlast beinhaltet,
wobei der dritte Computer (16) dazu ausgelegt ist:
die Kartenbereitstellungsanforderung über das Netzwerk (26) zu empfangen;
als Reaktion auf Empfangen der Kartenbereitstellungsanforderung die zweite verschlüsselte Nutzlast zu entschlüsseln, um die Kreditkartennummer (80) zu erhalten, die Kreditkartennummer (80) an eine Tokenizer-Anwendung (74) zu senden,
wobei als Reaktion auf Empfangen der Kreditkartennummer (80) die Tokenizer-Anwendung (74) das Kreditkarten-Token (T) erzeugt,
wobei das Kreditkarten-Token (T) in einem Token-Tresor (18) gesichert und auch über das Netzwerk (26) von dem dritten Computer (16) zurück an den ersten Computer (12) übertragen ist, und
wobei der erste Computer (12) dazu ausgelegt ist, das Kreditkarten-Token (T) in dem Speicher zu speichern.

2. System (10) nach Anspruch 1, ferner umfassend:
den dritten Computer (16) in Kommunikation mit dem externen Computer (14), wobei der externe Computer (14) dazu ausgelegt ist, den zweiten Barcode (82) an den dritten Computer (16) zu senden; und
den Token-Tresor (18) in Kommunikation mit dem dritten Computer (16);
wobei der dritte Computer (16) dazu ausgelegt ist, den zweiten Barcode (82) zu dekodieren, Inhalt der ersten verschlüsselten Nutzlast zu validieren, um das Kreditkarten-Token (T) zu erhalten, und eine ursprüngliche Kreditkartennummer (N) aus dem Token-Tresor (18) basierend auf dem Kreditkarten-Token (T) abzurufen.

3. System (10) nach Anspruch 2, wobei der dritte Computer (16) dazu ausgelegt ist, mit einem Bezahlnetzwerk (34) zu kommunizieren, um zu bestimmen, ob die ursprüngliche Kreditkartennummer (N) gültig ist, und wobei als Reaktion darauf, dass die ursprüngliche Kreditkartennummer (N) gültig ist, das Bezahlnetzwerk (34) Bezahlung für das Produkt autorisiert und eine Genehmigung an den dritten Computer (16) sendet.

4. System (10) nach Anspruch 3, wobei der externe Computer (14) dazu ausgelegt ist, die Genehmigung von dem dritten Computers (16) für die Bezahlung für das Produkt zu empfangen, einen dritten Barcode zu erzeugen, der einen Bezahlbeleg für das Produkt enthält, und den dritten Barcode zur Anzeige bekannt zu geben, wobei der dritte Barcode durch die Kamera (22) abgetastet ist.

5. System (10) nach einem der Ansprüche 1 bis 4, wobei der eine oder die mehreren Prozessoren Teil einer tragbaren elektronischen Vorrichtung sind.

6. Verfahren zum sicheren Austauschen eines Kreditkarten-Tokens (T) zwischen einem ersten Computer (12) und einem externen Computer (14) zum Kaufen eines Produktes, wobei das Verfahren umfasst:
Abtasten eines ersten Barcodes (82) durch eine Kamera (22) eines ersten Computers (12), wobei der erste Barcode (82) auf einer Anzeige (24) des externen Computers (14) bekannt gegeben wird und der erste Barcode (82) eine Vielzahl von Bezahlparametern des Produktes angibt;
Dekodieren des ersten Barcodes (82) durch den ersten Computer (12), um die Bezahlparameter zu extrahieren;
Bekanntgeben der Bezahlparameter durch den ersten Computer (12) zur Anzeige an einen Benutzer;
Empfangen einer ersten Eingabe durch den ersten Computer (12), wobei die erste Eingabe eine Kreditkartennummer (80) zum Kaufen des Produktes angibt;
als Reaktion auf Empfangen der ersten Eingabe Erzeugen eines zweiten Barcodes (84) durch den ersten Computer (12), der eine erste verschlüsselte Nutzlast enthält, wobei die erste verschlüsselte Nutzlast ein Kreditkarten-Token (T) beinhaltet, das der Kreditkartennummer (80) entspricht, wobei das Kreditkarten-Token (T) in einem Speicher des ersten Computers (12) gespeichert ist; und
Bekanntgeben des zweiten Barcodes (84) zur Anzeige durch den ersten Computer (12), wobei der zweite Barcode (84) durch eine optische Vorrichtung (30) des externen Computers (14) lesbar ist,
wobei das Verfahren ferner umfasst:
vor Abtasten des ersten Barcodes (82) durch den ersten Computer (12) Verbinden des ersten Computers (12) und eines dritten Computers (16) mit einem Netzwerk (26);
Empfangen einer zweiten Eingabe durch den ersten Computer (12), die die Kreditkartennummer (80) angibt;
als Reaktion auf Empfangen der zweiten Eingabe Erzeugen einer zweiten verschlüsselten Nutzlast durch den ersten Computer (12), die die Kreditkartennummer (80) enthält;
Übertragen einer Kartenbereitstellungsanforderung durch den ersten Computer (12) über das Netzwerk (26), die die zweite verschlüsselte Nutzlast beinhaltet;
Empfangen der Kartenbereitstellungsanforderung durch den dritten Computer (16) über das Netzwerk (26);
als Reaktion auf Empfangen der Kartenbereitstellungsanforderung Entschlüsseln der zweiten verschlüsselten Nutzlast durch den dritten Computer (16), um die Kreditkartennummer (80) zu erhalten;
Senden der Kreditkartennummer (16) an eine Tokenizer-Anwendung (74) durch den dritten Computer (16); und
als Reaktion auf Empfangen der Kreditkartennummer (80) Erzeugen des Kreditkarten-Tokens (T) durch die Tokenizer-Anwendung (74),
wobei das Verfahren ferner umfasst:
Sichern des Kreditkarten-Tokens (T) in einem Token-Tresor (18) durch den dritten Computer (16);
Übertragen des Kreditkarten-Tokens (T) durch den dritten Computer (16) über das Netzwerk (26);
Empfangen des Kreditkarten-Tokens (T) durch den ersten Computer (12) über das Netzwerk (26); und
Speichern des Kreditkarten-Tokens (T) in dem Speicher des ersten Computers (12).

7. Verfahren nach Anspruch 6, ferner umfassend:
Senden des zweiten Barcodes (84) durch den externen Computer (14) über das Netzwerk (26) an den dritten Computer (16);
Dekodieren des zweiten Barcodes (84) durch den dritten Computer (16);
Validieren von Inhalt der ersten verschlüsselten Nutzlast durch den dritten Computer (16), um das Kreditkarten-Token (T) zu erhalten; und
Abrufen einer ursprünglichen Kreditkartennummer (N) aus dem Token-Tresor (18) durch den dritten Computer (16) basierend auf dem Kreditkarten-Token (T).

8. Verfahren nach Anspruch 7, ferner umfassend:
Senden einer Kommunikation an ein Bezahlnetzwerk (34) durch den dritten Computer (16);
als Reaktion auf Empfangen der Kommunikation Bestimmen durch das Bezahlnetzwerk (34), ob die ursprüngliche Kreditkartennummer (N) gültig ist;
als Reaktion darauf, dass die ursprüngliche Kreditkartennummer (N) gültig ist, Autorisieren von Bezahlung für das Produkt durch das Bezahlnetzwerk (34); und
Senden einer Genehmigung an den dritten Computer (16) durch das Bezahlnetzwerk (34).

9. Verfahren nach Anspruch 8, ferner umfassend:
Empfangen der Genehmigung für die Bezahlung für das Produkt durch den dritten Computer (16);
Senden der Genehmigung über das Netzwerk (26) an den externen Computer (14);
Erzeugen eines dritten Barcodes durch den externen Computer (14), der einen Bezahlbeleg für das Produkt enthält; und
Bekanntgeben des dritten Barcodes zur Anzeige durch den externen Computer (14), wobei der dritte Barcode durch die Kamera (22) des ersten Computers (12) abgetastet wird.

10. Verfahren nach einem der Ansprüche 6 bis 9, wobei der erste Computer (12) eine tragbare elektronische Vorrichtung ist.

11. Computerprogrammprodukt zum sicheren Austauschen eines Kreditkarten-Tokens (T) mit einem externen Computer (14) zum Kaufen eines Produktes, wobei das Computerprogrammprodukt umfasst:
Programmcodeanweisungen, die auf einem computerlesbaren Medium gespeichert sind, um die Prozessschritte gemäß den Ansprüchen 6 bis 10 auszuführen, wenn das Programm auf einem Computer ausgeführt wird.

## Revendications

1. Système (10) pour échanger de manière sécurisée un token de carte de crédit (T) entre un premier ordinateur (12) et un ordinateur externe (14) pour acheter un produit, le système (10) comprenant :
l'ordinateur externe (14) ;
le premier ordinateur (12) avec un ou plusieurs processeurs, un appareil photo (22) couplé aux un ou plusieurs processeurs, et une mémoire couplée aux un ou plusieurs processeurs, la mémoire stockant des données comprenant une base de données et un code de programme qui, lorsqu'il est exécuté par les un ou plusieurs processeurs, amène le système (10) à :
scanner un premier code à barres (82) par l'appareil photo (22), où le premier code à barres (82) est publié sur un afficheur (24) de l'ordinateur externe (14) et le premier code à barres (82) indique une pluralité de paramètres de paiement du produit ;
décoder le premier code à barres (82) pour extraire les paramètres de paiement ;
publier les paramètres de paiement pour l'affichage à un utilisateur ;
recevoir une première entrée, où la première entrée indique un numéro de carte de crédit (80) pour acheter le produit ;
en réponse à la réception de la première entrée, générer un deuxième code à barres (84) qui contient une première charge utile chiffrée, où la première charge utile chiffrée inclut un token de carte de crédit (T) qui correspond au numéro de carte de crédit (80), où le token de carte de crédit (T) est stocké dans la mémoire ; et
publier le deuxième code à barres (84) pour l'affichage, où le deuxième code à barres (84) est lisible par un dispositif optique (30) de l'ordinateur externe (14),
dans lequel avant le scannage du premier code à barres (82) par l'appareil photo (22), le premier ordinateur (12) et un troisième ordinateur (16) sont connectés à un réseau (26), où le premier ordinateur (12) est agencé pour :
recevoir une seconde entrée indiquant le numéro de carte de crédit (80) ;
générer une seconde charge utile chiffrée qui contient le numéro de carte de crédit (80) en réponse à la réception de la seconde entrée ;
transmettre une demande de provisionnement de carte incluant la seconde charge utile chiffrée sur le réseau (26),
dans lequel le troisième ordinateur (16) est agencé pour :
recevoir la demande de provisionnement de carte sur le réseau (26) ;
déchiffrer, en réponse à la réception de la demande de provisionnement de carte, la seconde charge utile chiffrée pour obtenir le numéro de carte de crédit (80), envoyer le numéro de carte de crédit (80) à une application de tokeniseur (74),
dans lequel, en réponse à la réception du numéro de carte de crédit (80), l'application de tokeniseur (74) génère le token de carte de crédit (T),
dans lequel le token de carte de crédit (T) est sauvegardé dans un coffre-fort de tokens (18) et est également retransmis sur le réseau (26) du troisième ordinateur (16) au premier ordinateur (12), et
dans lequel le premier ordinateur (12) est agencé pour stocker le token de carte de crédit (T) dans la mémoire.

2. Système (10) selon la revendication 1, comprenant en outre :
le troisième ordinateur (16) en communication avec l'ordinateur externe (14), où l'ordinateur externe (14) est agencé pour envoyer le deuxième code à barres (82) au troisième ordinateur (16) ; et
le coffre-fort de tokens (18) en communication avec le troisième ordinateur (16) ;
dans lequel le troisième ordinateur (16) est agencé pour décoder le deuxième code à barres (82), pour valider le contenu de la première charge utile chiffrée pour obtenir le token de carte de crédit (T), et pour récupérer un numéro de carte de crédit d'origine (N) à partir du coffre-fort de tokens (18) sur la base du token de carte de crédit (T).

3. Système (10) selon la revendication 2, dans lequel le troisième ordinateur (16) est agencé pour communiquer avec un réseau de paiement (34) pour déterminer si le numéro de carte de crédit d'origine (N) est valide, et en réponse au fait que le numéro de carte de crédit d'origine (N) soit valide, le réseau de paiement (34) autorise le paiement pour le produit et envoie une approbation au troisième ordinateur (16).

4. Système (10) selon la revendication 3, dans lequel l'ordinateur externe (14) est agencé pour recevoir l'approbation en provenance du troisième ordinateur (16) pour le paiement pour le produit, pour générer un troisième code à barres qui contient un reçu de paiement pour le produit, et pour publier le troisième code à barres pour l'affichage, où le troisième code à barres est scanné par l'appareil photo (22).

5. Système (10) selon l'une quelconque des revendications 1 à 4, dans lequel les un ou plusieurs processeurs font partie d'un dispositif électronique portable.

6. Procédé pour échanger de manière sécurisée un token de carte de crédit (T) entre un premier ordinateur (12) et un ordinateur externe (14) pour acheter un produit, le procédé comprenant :
le scannage d'un premier code à barres (82) par un appareil photo (22) d'un premier ordinateur (12), où le premier code à barres (82) est publié sur un afficheur (24) de l'ordinateur externe (14) et le premier code à barres (82) indique une pluralité de paramètres de paiement du produit ;
le décodage du premier code à barres (82), par le premier ordinateur (12), pour extraire les paramètres de paiement ;
la publication des paramètres de paiement pour l'affichage à un utilisateur par le premier ordinateur (12) ;
la réception d'une première entrée par le premier ordinateur (12), où la première entrée indique un numéro de carte de crédit (80) pour acheter le produit ;
en réponse à la réception de la première entrée, la génération, par le premier ordinateur (12), d'un deuxième code à barres (84) qui contient une première charge utile chiffrée, où la première charge utile chiffrée inclut un token de carte de crédit (T) qui correspond au numéro de carte de crédit (80), où le token de carte de crédit (T) est stocké dans une mémoire du premier ordinateur (12) ; et
la publication du deuxième code à barres (84) pour l'affichage par le premier ordinateur (12), où le deuxième code à barres (84) est lisible par un dispositif optique (30) de l'ordinateur externe (14),
dans lequel le procédé comprend en outre :
avant le scannage du premier code à barres (82) par le premier ordinateur (12), la connexion du premier ordinateur (12) et d'un troisième ordinateur (16) à un réseau (26) ;
la réception, par le premier ordinateur (12), d'une seconde entrée indiquant le numéro de carte de crédit (80) ;
en réponse à la réception de la seconde entrée, la génération, par le premier ordinateur (12), d'une seconde charge utile chiffrée qui contient le numéro de carte de crédit (80) ;
la transmission, par le premier ordinateur (12), d'une demande de provisionnement de carte incluant la seconde charge utile chiffrée sur le réseau (26) ;
la réception de la demande de provisionnement de carte, par le troisième ordinateur (16), sur le réseau (26) ;
en réponse à la réception de la demande de provisionnement de carte, le déchiffrement de la seconde charge utile chiffrée pour obtenir le numéro de carte de crédit (80) par le troisième ordinateur (16) ;
l'envoi du numéro de carte de crédit (16) à une application de tokeniseur (74) par le troisième ordinateur (16) ; et
en réponse à la réception du numéro de carte de crédit (80), la génération du token de carte de crédit (T) par l'application de tokeniseur (74),
dans lequel le procédé comprend en outre :
la sauvegarde du token de carte de crédit (T) dans un coffre-fort de tokens (18) par le troisième ordinateur (16) ;
la transmission, par le troisième ordinateur (16), du token de carte de crédit (T) sur le réseau (26) ;
la réception du token de carte de crédit (T) par le premier ordinateur (12) sur le réseau (26) ; et
le stockage du token de carte de crédit (T) dans la mémoire du premier ordinateur (12).

7. Procédé selon la revendication 6, comprenant en outre :
l'envoi, par l'ordinateur externe (14), du deuxième code à barres (84) sur le réseau (26) au troisième ordinateur (16) ;
le décodage, par le troisième ordinateur (16), du deuxième code à barres (84) ;
la validation du contenu de la première charge utile chiffrée, par le troisième ordinateur (16), pour obtenir le token de carte de crédit (T) ; et
la récupération, par le troisième ordinateur (16), d'un numéro de carte de crédit d'origine (N) à partir du coffre-fort de tokens (18) sur la base du token de carte de crédit (T).

8. Procédé selon la revendication 7, comprenant en outre :
l'envoi d'une communication à un réseau de paiement (34) par le troisième ordinateur (16) ;
en réponse à la réception de la communication, la détermination de si le numéro de carte de crédit d'origine (N) est valide par le réseau de paiement (34) ;
en réponse au fait que le numéro de carte de crédit d'origine (N) soit valide, l'autorisation du paiement pour le produit par le réseau de paiement (34) ; et
l'envoi d'une approbation au troisième ordinateur (16) par le réseau de paiement (34).

9. Procédé selon la revendication 8, comprenant en outre :
la réception, par le troisième ordinateur (16), de l'approbation pour le paiement pour le produit ;
l'envoi de l'approbation sur le réseau (26) à l'ordinateur externe (14) ;
la génération, par l'ordinateur externe (14), d'un troisième code à barres qui contient un reçu de paiement pour le produit ; et
la publication du troisième code à barres pour l'affichage par l'ordinateur externe (14), où le troisième code à barres est scanné par l'appareil photo (22) du premier ordinateur (12).

10. Procédé selon l'une quelconque des revendications 6 à 9, dans lequel le premier ordinateur (12) est un dispositif électronique portable.

11. Produit de programme informatique pour échanger de manière sécurisée un token de carte de crédit (T) avec un ordinateur externe (14) pour acheter un produit, le produit de programme informatique comprenant :
des instructions de code de programme stockées sur un support lisible par ordinateur pour exécuter les étapes de processus selon les revendications 6 à 10 lorsque ledit programme est exécuté sur un ordinateur.
